# EUROPÄISCHE PATENTSCHRIFT

(11) **EP 1 965 178 B1**
(45) Veröffentlichungstag und Bekanntmachung des Hinweises auf die Patenterteilung: **08.04.2015**
(21) Anmeldenummer: 08003471.3
(22) Anmeldetag: 26.02.2008
(51) Int. Cl.: F16C 29/00, G01D 5/20

(54) **Induktiver Sensor**
Inductive sensor
Capteur inductif

(30) Priorität: 01.03.2007 DE 102007009994
(43) Veröffentlichungstag der Anmeldung: 03.09.2008
(73) Patentinhaber: Robert Bosch GmbH, 70469 Stuttgart (DE)
(72) Erfinder: Reusing, Günter, 97464 Niederwerrn (DE); Hollweck, Roman, 87600 Kaufbeuren (DE); Hauser, Karin, 87435 Kempten (DE); Stier, Anton, 87640 Biessenhofen (DE); Hohnke, Florian, 87600 Kaufbeuren (DE)
(74) Vertreter: Maiß, Harald

(56) Entgegenhaltungen:
- WO-A1-2005/090806
- DE-A1- 4 205 957
- DE-A1- 10 048 290
- DE-A1- 10 134 184
- US-A- 5 901 458

## Beschreibung

Die Erfindung betrifft einen induktiven Sensor gemäß dem Oberbegriff von Anspruch 1, ein Positionsmesssystem mit diesem Sensor und ein Verfahren zu dessen Herstellung.

Ein induktiver Sensor ist beispielsweise aus der EP 0 743 508 A2 bekannt. Dort ist in den Figuren 16A und 16B ein Sensor gezeigt, bei dem mehrere elektrische Leitungswindungen 102, 104 auf einem Substrat 126 aufgebracht sind. Die Leitungswindungen sind in mehreren Schichten angeordnet, die von dünnen Isolierschichten 162 elektrisch voneinander getrennt sind. Zur Abdeckung des Sensors ist ebenfalls eine Isolierschicht 162 vorgesehen, so dass die Leitungswindungen gegen Umgebungseinflüsse wie z.B. eindringende elektrisch leitende Flüssigkeiten geschützt sind. Das Substrat 126 ist in Form einer elektrischen Leiterplatte ausgeführt. Dieses Substrat verleiht der gesamten Anordnung die notwendige mechanische Festigkeit. Die Leitungswindung wird aus einer dünnen vollflächig aufgebrachten Kupferschicht durch einen photochemischen Ätzprozess hergestellt. Bei den Isolierschichten 162 handelt es sich um Lackschichten. Die Dicke der Leitungswindungen und der Isolierschichten ist in Fig. 16B im Vergleich zum Substrat stark übertrieben dargestellt.

Ein ähnlicher Sensor wird in der linearen Positionsmessvorrichtung verwendet, die aus der Druckschrift "Anleitung Integriertes Messsystem für Kugel- und Rollenschienenführungen" der Bosch Rexroth AG (Nr. R310DE 2386; Ausgabe 2004.04) bekannt ist. Dieser Sensor wurde zum Schutz gegen mechanische Beschädigung zusätzlich mit einem dünnen Stahlblech abgedeckt. Diese Metallabdeckung ist notwendig, weil die genannten Führungen u. a. in Werkzeugmaschinen eingesetzt werden, in denen sie aggressiven Kühl-/Schmierstoffen ausgesetzt sind. Die dünne Schutzschicht gemäß der EP 743 508 A2 würde diesen Beanspruchungen nicht Stand halten. Eine Abdeckung aus einem Kunststoff wäre ebenfalls nicht geeignet, da sie zu dick sein müsste, um die notwendige Widerstandsfähigkeit zu gewährleisten. Das Abdeckblech wird montiert, nachdem die Leitungswindung mit der Anschlussleitung zur Auswerteelektronik kontaktiert wurde, da die Kontaktstelle anschließend nicht mehr zugänglich ist. Zum Schutz gegen eindringende Flüssigkeiten ist der Sensor zusätzlich mit einem Kunstharz vergossen.

Durch die Stahlblech-Abdeckung werden die Signale, die der Sensor beim Abtasten der zugeordneten Maßverkörperung erzeugt, geschwächt. Diese Abschwächung wird u. a. durch Wirbelströme verursacht, die von den Wechselströmen in den Leitungswindungen des Sensors induziert werden. Diese Wirbelströme können durch die Verwendung eines besonders dünnen Abdeckbleches (Dicke 50 bis 200 µm) minimiert werden.

Weiter wird das Signal durch den erhöhten Abstand zwischen den Leitungswindungen und der Maßverkörperung geschwächt. Dieser Abstand wird einerseits durch die Dicke des Abdeckbleches erhöht. Weiter wird der Abstand durch die Klebeschicht zwischen dem Sensor und dem Abdeckblech vergrößert. Der Abstand wird darüber hinaus durch die abdeckende Isolierschicht vergrößert, die bei der Herstellung der Leitungswindung auf dem Substrat vorgesehen wird. In diesem Zusammenhang ist darauf hinzuweisen, dass der Gesamtabstand zwischen den Leitungswindungen des Sensors und der Maßverkörperung keinesfalls größer als die Teilung der Maßverkörperung sein darf, da sonst die notwendige Messgenauigkeit nicht mehr gewährleistet ist. Die Teilung beträgt bei der oben genannten linearen Positionsmessvorrichtung 1 mm, wobei kleinere Teilungen angestrebt werden, um die Messgenauigkeit zu erhöhen. Soweit technisch möglich sollte der genannte Abstand so klein wie möglich ausgeführt werden.

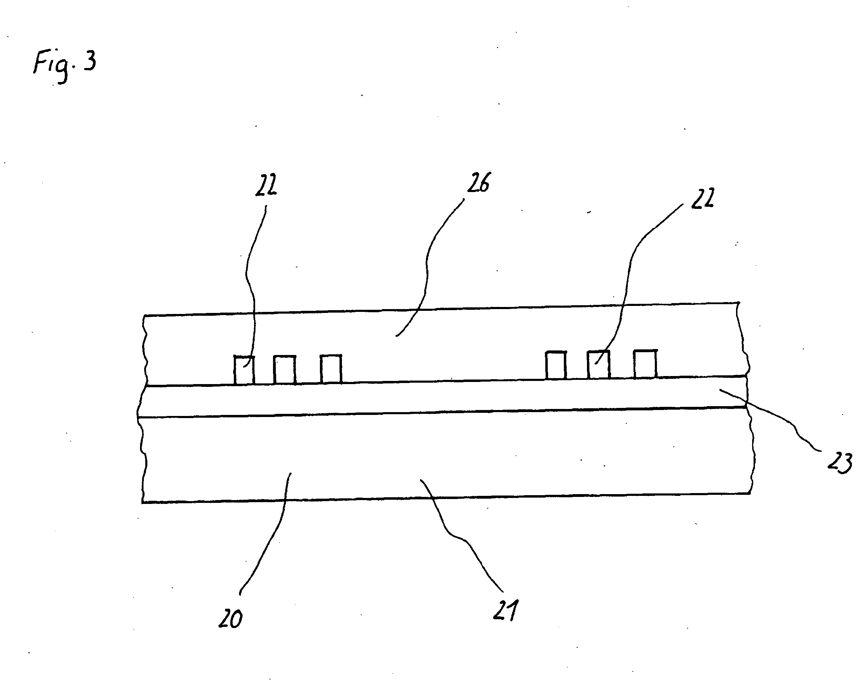

Der Vollständigkeit halber wird auf die DE 103 60 941 A1 hingewiesen, die einen gattungsfremden Drucksensor zeigt. Bei der Ausführungsform gem. Fig. 3 wird eine Messeinrichtung 6 und ein Dehnmessstreifen 60 in Dünnschichttechnologie auf eine Membran 4 aufgebracht. Drucksensoren sind aber mit den erfindungsgemäßen induktiven Sensoren nicht vergleichbar, da das vorstehend beschriebene Abstandsproblem bei der Druckmessung nicht auftritt. Die gezeigte Membran muss darüber hinaus sehr viel dicker als das Abdeckblech bei einem induktiven Sensor ausgeführt werden, da sie den zu messenden Druckkräften Stand halten muss.

Es ist Aufgabe der Erfindung einen gattungsgemäßen Sensor bereitzustellen, bei dem der Abstand zwischen den Leitungswindungen und der zugeordneten Maßverkörperung geringer ausgeführt werden kann. Darüber hinaus soll die Herstellung des Sensors vereinfacht werden.

Diese Aufgabe wird dadurch gelöst, dass das Metallblech zur Abdeckung gleichzeitig als Substrat genutzt wird, das der Leitungswindung die notwendige Stabilität verleiht. Auf das gesonderte Substrat kann daher verzichtet werden. Weiter wird es möglich, die Leitungswindung unmittelbar auf das Metallblech aufzubringen. Auf eine gesonderte Klebeschicht kann verzichtet werden. Da das Metallblech elektrisch leitend ist, muss auf der Seite der Leitungswindung eine isolierende Schicht vorgesehen sein. Diese kann sehr viel dünner als eine gesonderte Klebeschicht ausgeführt werden. Die isolierende Schicht ist vorzugsweise dünner als 10 µm. Höchst vorzugsweise ist eine einphasige Schicht vorgesehen, da diese besonders dünn ausgeführt werden kann. Das Metallblech ist vorzugsweise dünner als 0,2 mm.

Damit die Leitungswindung auf einfache Weise mit einem bekannten photochemischen Ätzprozess hergestellt werden kann, ist sie als ebene Spirale ausgeführt. Bei einem derartigen Prozess wird zuerst eine vollflächige Metallschicht vorzugsweise aus Kupfer auf das Substrat aufgebracht und mit einem lichtempfindlichen Lack beschichtet. Auf diesen Lack werden anschließend die gewünschten Leiterstrukturen mittels einer Maske aufbelichtet. Die belichteten Lackflächen werden sodann chemisch abgelöst. Die freigelegten Bereiche der Metallschicht können somit mit einer Ätzflüssigkeit weggeäzt werden, so dass nur die gewünschten Leitungswindungen stehen bleiben. Mit einem derartigen Verfahren lassen sich kreuzungsfreie planare Leiteranordnungen kostengünstig herstellen, weshalb die genannten spiralförmigen Spulen bevorzugt sind. Die Spirale muss hierfür nicht notwendigerweise kreisförmig sein. Es können auch Quadrat- oder Rechteckformen vorgesehen sein. Damit der Sensor ein genügend starkes Signal abgibt, weist die Spirale wenigstens 10 Windungen auf.

Die Isolierschicht kann durch Verwendung eines Schleuderverfahrens sehr dünn ausgeführt werden. Hierbei wird ein flüssiger Kunststoff, vorzugsweise Polyimid, auf das Metallblech aufgebracht, welches anschließend um eine Achse senkrecht zur Blechebene in schnelle Drehung versetzt wird, so dass der flüssige Kunststoff durch die Zentrifugalkraft zu einer dünnen Schicht über die gesamte Blechoberfläche verteilt wird. Überschüssiger Kunststoff wird von der Blechoberfläche heruntergeschleudert. Nach dem Schleudervorgang wird der Kunststoff zu einer festen Schicht ausgehärtet. Polyimid ist für die Herstellung sehr dünner Isolierschichten besonders gut geeignet. Darüber hinaus haftet an diesem Material die anschließend aufzubringende Metallschicht für die Leitungswindungen besonders gut.

Die Sensoren können besonders kostengünstig hergestellt werden, wenn die isolierende Schicht und die wenigstens eine Leitungswindung für mehrere Sensoren jeweils gleichzeitig auf ein Metallblech aufgebracht werden, wobei anschließend aus dem Metallblech die einzelnen Sensoren vorzugsweise mit einem Laserstrahl herausgeschnitten werden. Die Prozessschritte beim photochemischen Ätzen und beim Aufbringen der Isolierschicht können ohne Weiteres mit geringem Mehraufwand für mehrere Sensoren gleichzeitig durchgeführt werden, so dass der Arbeitsaufwand pro Sensor sinkt. Die Zerteilung des Blechs mit einem Laserstrahl ist bevorzugt, weil hierbei keine Verbiegung des dünnen Metallblechs zu befürchten ist.

Der Sensor weist ein Gehäuse mit wenigstens einer ersten Öffnung auf, wobei die erste Öffnung mit dem Metallblech derart verschlossen ist, dass sich die Leitungswindung im Inneren des Gehäuses befindet. Das Gehäuse stützt das relativ instabile Metallblech ab. Gleichzeitig kann das Metallblech über das Gehäuse an einer übergeordneten Baugruppe wie beispielsweise dem Führungswagen eines Linearwälzlagers befestigt werden. Das Gehäuse besitzt hierfür Befestigungsmittel, die dafür geeignet sind, den Abstand zwischen Metallblech und der Maßverkörperung auf der Führungsschiene auf den gewünschten geringen Wert von vorzugsweise weniger als 0,1 mm einzustellen. Gleichzeitig soll aber das Metallblech die Maßverkörperung nicht berühren. Das Gehäuse dient selbstverständlich auch dem Schutz der empfindlichen Leitungswindung. Deshalb ist es sinnvoll, wenn das Metallblech die erste Öffnung vollständig verschließt, so dass keine Fremdstoffe wie Kühl-/Schmiermittel in das Gehäuse eindringen können.

Das vorzugsweise ebene Metallblech ist mit dem Gehäuse verschweißt, wobei die Schweißnaht nicht über die Ebene, die durch die Außenoberfläche des Metallblechs definiert wird, hinaus ragt. Durch die Vermeidung der überstehenden Schweißnaht kann der Abstand zwischen Leitungswindung und Maßverkörperung besonders klein ausgeführt werden, da die Schweißnaht keinen zusätzlichen Platz benötigt. Das Gehäuse ist bei dieser Ausführungsform vorzugsweise aus Metall, da dadurch eine besonders feste Schweißverbindung hergestellt werden kann. Die Schweißverbindung kann darüber hinaus problemlos flüssigkeitsdicht ausgeführt werden. Ein ebenes Metallblech wird bevorzugt, weil es besonders einfach herstellbar ist. Gleiches trifft für die ebene Anlagefläche für das Metallblech am Gehäuse zu.

Das Metallblech kann mittels eines Laserstrahls mit dem Gehäuse verschweißt sein. Durch Verwendung eines Laserstrahls ist es besonders leicht möglich, eine Schweißnaht zu erzeugen, die nicht über das Metallblech übersteht. Dies liegt zum einen daran, dass mit einem Laserstrahl eine sehr dünne Schweißnaht erzeugt werden kann. Zum anderen kann der Laserstrahl mittels einer geeigneten Optik sehr genau auf den gewünschten Schweißpunkt gerichtet werden. Im vorliegenden Fall hat es sich bewährt, den Laserstrahl auf eine Position am Rand des Gehäuses auszurichten, die um etwa die halbe Schweißnahtbreite entfernt von der Auflagefläche des Metallblechs liegt, so dass der Schweißnahtrand das Metallblech gerade noch erfasst. Auf diese Weise kann ein Überstehen der Schweißnaht wirksam verhindert werden.

Das Gehäuse kann wenigstens eine zweite Öffnung aufweisen, in die eine Vergussmasse eingefüllt ist, welche das Metallblech abstützt. Durch eine zweite Gehäuseöffnung wird die Kontaktierung der Leitungswindung mit dem Anschlusskabel für die Auswerteelektronik hergestellt. Die zweite Öffnung bildet zusammen mit der ersten Öffnung vorzugsweise einen Durchbruch im Gehäuse, so dass die Rückseite des Metallblechs besonders gut zugänglich ist. Die Vergussmasse dient zum einen dazu, die Leitungswindung und die Kontaktierung von Umgebungseinflüssen zu schützen. Hierfür sollte die Vergussmasse alle zu schützenden Bauteile bedecken bzw. einschließen. Zum anderen soll die Vergussmasse dem Metallblech die notwendige Festigkeit verleihen, so dass es beispielsweise bei der Montage des Sensors nicht durch Unachtsamkeit verbogen werden kann.

Zur elektrischen Verbindung der Leitungswindung mit einer zugeordneten Auswerteelektronik kann eine flexible Leiterplatte mit einem Kontaktierungs- und einem Anschlussabschnitt vorgesehen sein, wobei der Kontaktierungsabschnitt vollständig mit der Vergussmasse bedeckt ist und wobei der Anschlussabschnitt aus der Vergussmasse herausragt. Eine flexible Leiterplatte stellt eine besonders kostengünstige Möglichkeit dar, um mehrere elektrische Verbindungsleitungen zwischen zwei Baugruppen zu realisieren. In Verbindung mit dem vorliegenden Sensor sind üblicherweise viele Verbindungsleitungen notwendig, da dieser mehrere separate Leitungswindungen aufweisen kann, die mit der Auswerteelektronik verbunden werden müssen. Mit mehreren gesonderten Leitungswindungen kann u. a. die Auswertegenauigkeit der betreffenden Positionsmesseinrichtung gesteigert werden. Der Kontaktierungsabschnitt der flexiblen Leiterplatte ist vorzugsweise parallel zum Metallblech angeordnet, wodurch der Abstand zwischen den Kontaktierungsstellen auf der flexiblen Leiterplatte und auf dem Metallblech besonders klein ausgeführt werden kann, insbesondere in dem Fall, dass die Kontaktierungspunkte über die gesamte Oberfläche des Metallblechs verteilt angeordnet sind. Dadurch, dass der Kontaktierungsabschnitt mit Vergussmasse abgedeckt ist, sind die Kontaktierungsstellen besonders gut gegen Umgebungseinflüsse geschützt.

Zwischen dem Kontaktierungsabschnitt und dem Metallblech kann eine Trennschicht vorgesehen sein, die einen wesentlich geringeren Elastizitätsmodul und wenigstes die fünffache Dicke des Metallblechs aufweist. Mit der Trennschicht wird der Kontaktierungsabschnitt relativ zum Metallblech ausgerichtet. Die Trennschicht besteht vorzugsweise aus einem elektrisch nicht leitenden Material und ist vorzugsweise auf beiden Seiten mit einer Klebeschicht versehen, so dass eine feste Verbindung zwischen Kontaktabschnitt und Metallblech besteht. Um zu vermeiden, dass Unebenheiten des Kontaktierungsabschnitts auf das Metallblech übertragen werden, hat die Trennschicht die genannte Dicke bzw. den genannten Elastizitätsmodul.

An dem Kontaktierungsabschnitt der flexiblen Leiterplatte kann wenigstens eine Kontaktfläche vorgesehen sein, die mit der wenigstens einen Leitungswindung auf dem Metallblech über einen Draht elektrisch leitend verbunden ist, wobei eine elektrische Leiterbahn von der Kontaktfläche in den Anschlussabschnitt der flexiblen Leiterplatte führt. Durch das vorgeschlagene Bonding ist eine besonders kostengünstige Verbindung zwischen dem Kontaktierungsabschnitt und der Leitungswindung möglich, da zur Herstellung übliche automatisierte Vorrichtungen verwendet werden können. Die betreffenden Drähte sind vorzugsweise sehr dünn ausgeführt (kleiner als 0,1 mm Durchmesser) und aus Aluminium oder Gold. Aufgrund der geringen Festigkeit der Drähte ist darauf zu achten, dass die Wärmeausdehnungskoeffizienten der Vergussmasse, der Drähte, des Kontaktierungsabschnitts und des Metallblechs so aufeinander abgestimmt sind, dass die Drähte aufgrund von Temperaturwechseln nicht abreißen.

Vorzugsweise wird die Verbindungsstelle zwischen dem Draht und der wenigstens einen Leitungswindung nicht von dem Kontaktierungsabschnitt der flexiblen Leiterplatte überdeckt, so dass diese für die Bonding-Vorrichtung gut zugänglich ist.

Die Erfindung wird im Folgenden anhand der beigefügten Zeichnungen beschrieben. Es stellt dar:
- Fig. 1: eine Explosionsdarstellung eines erfindungsgemäßen Sensors;
- Fig. 2: eine Schnittdarstellung des Sensors gemäß Fig. 1;
- Fig. 3: eine grobschematische Schnittansicht des Metallblechs mit den Leitungswindungen des Sensors gemäß Fig. 1;
- Fig. 4: eine Schnittansicht der Schweißnaht zwischen Metallblech und Gehäuse; und
- Fig. 5: eine Vorderansicht des Sensors gemäß Fig. 1 in Verbindung mit der zugeordneten Maßverkörperung.

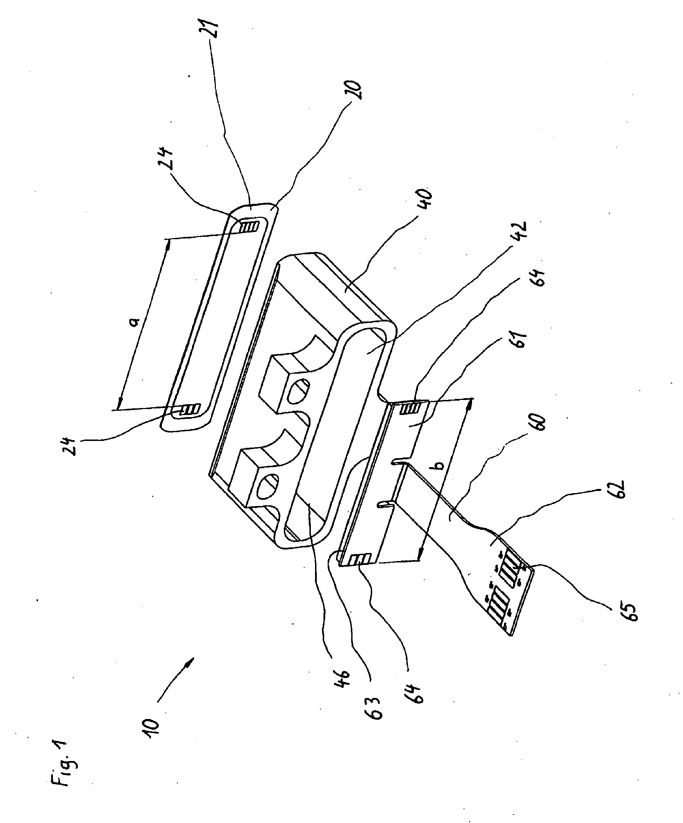

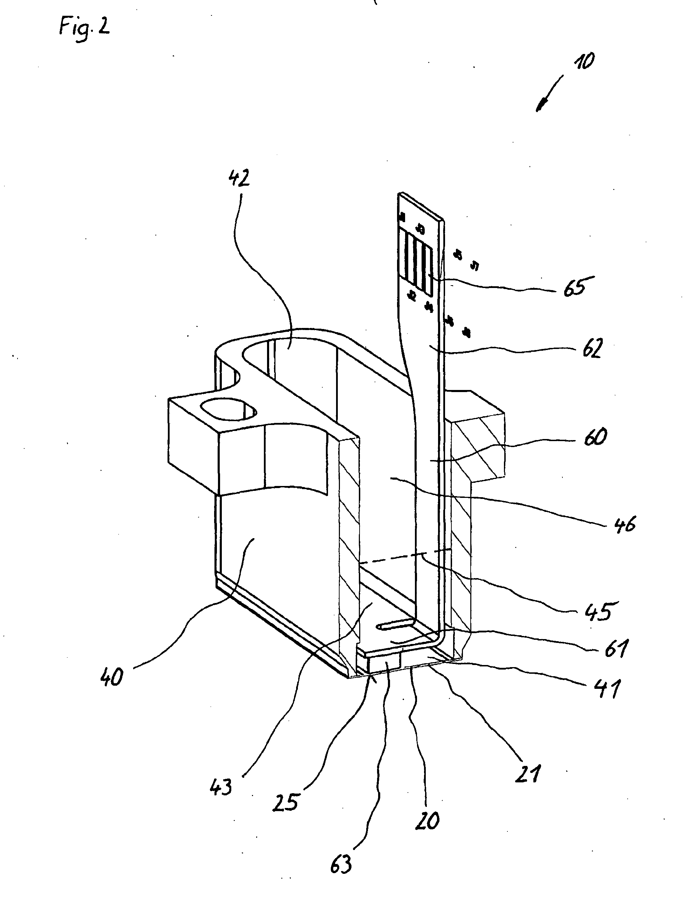

In Fig. 1 und Fig. 2 ist ein erfindungsgemäßer induktiver Sensor ganz allgemein mit 10 bezeichnet. Er umfasst ein Gehäuse 40 mit einem langlochförmigen Durchbruch 46, der an seinen Enden eine erste und eine zweite Öffnung 41; 42 aufweist. Das Gehäuse besteht aus nichtrostendem und nichtmagnetischem Stahl und ist mit dem Metal-Injection-Molding-Verfahren (MIM-Verfahren) hergestellt.

Die erste Öffnung 41 des Gehäuses ist mit einem 100 µm dicken Metallblech verschlossen, das aus nichtrostendem und nichtmagnetischem Stahl besteht. In Fig. 1 sind sieben Kontaktflächen 24 am Metallblech dargestellt, die in zwei Reihen angeordnet sind. Zwischen den Kontaktflächen 24 sind die (nicht dargestellten) Leitungswindungen vorgesehen, die gemäß dem Ausführungsbeispiel Fig. 9 in Verbindung mit Fig. 16 der EP 1 164 358 B1 ausgeführt sind. Die Kontaktflächen 24 sind elektrisch leitend mit den Leitungswindungen verbunden.

Weiter ist eine flexible Leiterplatte 60 mit einem Kontaktierungsabschnitt 61 und einem Anschlussabschnitt 62, auf denen wiederum jeweils sieben Kontaktflächen 64 und 65 vorgesehen sind, die elektrisch leitend miteinander verbunden sind. Die Breite b des Anschlussabschnitts 62 ist kleiner als der Abstand a der Kontaktflächen 24 ausgeführt, so dass der Anschlussabschnitt die Kontaktflächen 24 nicht überdeckt. Die Kontaktflächen 24 am Metallblech und die Kontaktflächen 65 am Anschlussabschnitt sind über dünne Aluminiumdrähte elektrisch leitend miteinander verbunden, so dass insgesamt eine elektrisch leitende Verbindung zwischen den Kontaktflächen 64 am Kontaktierungsabschnitt und den Leitungswindungen vorhanden ist.

Zwischen dem Anschlussabschnitt 62 und dem Metallblech 21 ist eine Trennschicht 63 aus doppelseitigem Klebeband vorgesehen, welches an den genannten Bauteilen befestigt ist. In die zweite Öffnung 42 wird eine (nicht dargestellte) Vergussmasse bis zu dem Niveau 45 eingefüllt, um die o. g. Bauteile vor Umgebungseinflüssen, insbesondere eindringenden Flüssigkeiten zu schützen. Darüber hinaus verleiht die Vergussmasse dem Metallblech die notwendige Stabilität.

In Fig. 3 ist ein grobschematischer Querschnitt des Metallblechs 21 mit den Leitungswindungen 22, der elektrisch isolierenden Schicht 23 und einer elektrisch isolierenden Schutzschicht 26 dargestellt. Die isolierenden Schichten 23; 26 werden jeweils von einer einzigen, einphasigen Polyimid-Schicht gebildet. Die Leitungswindungen bestehen aus Kupfer und sind etwa 2 µm dick. Die Breite der Leitungswindungen und deren Abstand beträgt etwa 10 µm. Die genannten Werte sollten möglichst klein sein, damit auf der vorgegebenen Fläche möglichst viele Leitungswindungen Platz finden, so dass der Sensor sehr empfindlich ist. Hinzuweisen ist ferner darauf, dass in Fig. 3 der Übersichtlichkeit halber nur eine Schicht mit Leiterbahnen dargestellt ist. Selbstverständlich sind für Leitungskreuzungen u. ä. in bekannter Weise weitere Schichten mit Kupferleitungen vorgesehen, die durch Polyimid-Schichten elektrisch voneinander getrennt sind.

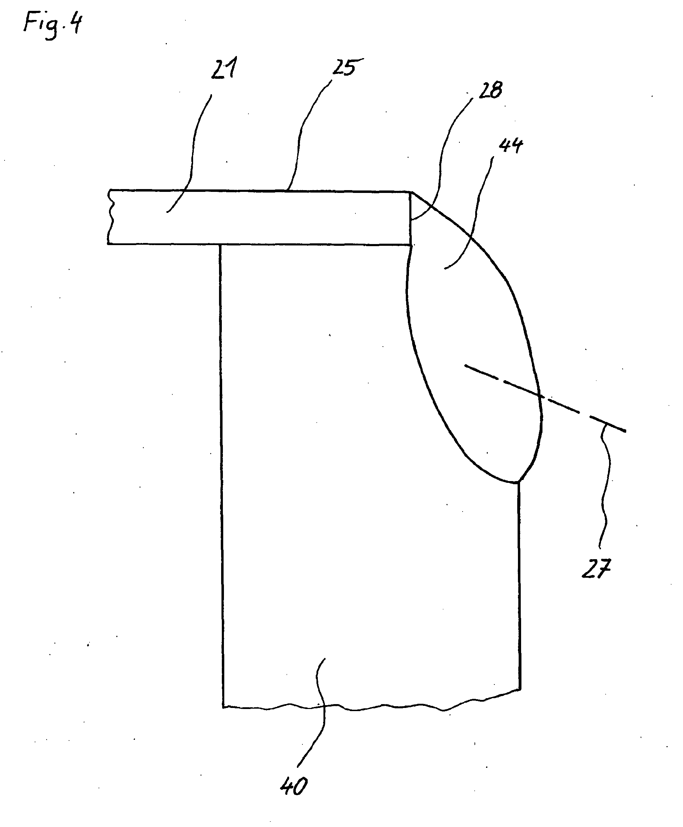

Fig. 4 zeigt einen Querschnitt der Schweißnaht 44, mit der das Metallblech 21 am Gehäuse 40 befestigt ist. Die Laserschweißnaht wurde so angebracht, dass sie nicht über die Außenoberfläche 25 des Metallblechs übersteht. Hierfür wurde ein Laserstrahl in der in Fig. 4 dargestellten Ausrichtung auf das Gehäuse gerichtet, so dass dieses aufschmilzt. Die Laser-Leistung wurde gerade so hoch eingestellt, dass das aufgeschmolzene Metall des Gehäuses das Metallblech gerade noch erfasst. Aufgrund der Oberflächenspannung der Schmelze wird die Stirnfläche 28 des Metallblechs vollständig benetzt, ohne dass die fertige Schweißnaht über die Außenoberfläche 25 des Metallblechs übersteht.

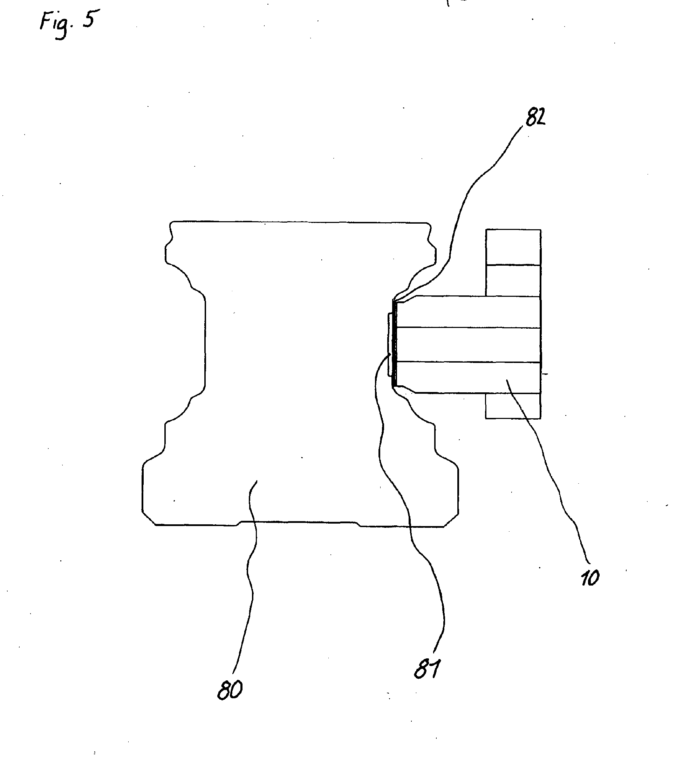

In Fig. 5 ist dargestellt, wie der erfindungsgemäße Sensor 10 mit einer linearen Maßverkörperung 81 zusammenwirkt. Die Maßverkörperung 81 ist in Form eines Blechstreifens aus magnetisierbarem Stahlblech ausgeführt, das eine Vielzahl periodisch angeordneter Rechteckausschnitte aufweist. Sie ist entsprechend der EP 1 052 480 B1 an der Führungsschiene 80 eines Linearwälzlagers angebracht. Der Sensor 10 ist in dem Messkopf der DE 103 47 360 A1 untergebracht, der wiederum am Führungswagen des Linearwälzlagers befestigt ist.

Wie bereits eingangs erwähnt, ist es für eine genaue Positionsbestimmung entscheidend, dass der Abstand zwischen den Leitungswindungen 22 und der Maßverkörperung 81 möglichst klein und in jedem Fall kleiner als deren Periode ist, die im vorliegenden Fall 1 mm beträgt. Der genannte Abstand ergibt sich bei dem Ausführungsbeispiel gemäß Fig. 5 aus folgenden Abmessungen:
- Dicke des Abdeckblechs 82
- Abstand des Abdeckblechs 82 zum Metallblech 21
- Dicke des Metallblechs 21
- Dicke der elektrisch isolierenden Schicht 23

Hieraus wird klar, das jedes einzelne Maß möglichst klein ausgeführt sein muss, um einen optimal kleinen Abstand zu erreichen. Insbesondere ist es für die Minimierung des Abstands zwischen Abdeckblech 82 und Metallblech 21 wichtig, dass die Schweißnaht 44 nicht über die Außenoberfläche 25 des Metallblechs übersteht. Der genannte Abstand muss in jedem Fall so groß gewählt werden, dass sich Abdeckblech und Metallblech beim Betrieb des Linearwälzlagers nicht berühren, um Beschädigungen zu vermeiden.

### Bezugszeichenliste

- 10: Sensor

- 20: Substrat
- 21: Metallblech
- 22: Leitungswindung
- 23: elektrisch isolierende Schicht
- 24: Kontaktfläche am Metallblech
- 25: Außenoberfläche des Metallblechs
- 26: elektrisch isolierende Schutzschicht
- 27: Laserstrahl
- 28: Stirnfläche des Metallblechs

- 40: Gehäuse
- 41: erste Öffnung
- 42: zweite Öffnung
- 43: Innere des Gehäuses
- 44: Schweißnaht
- 45: Oberflächenniveau der Vergussmasse
- 46: Durchbruch

- 60: flexible Leiterplatte
- 61: Kontaktierungsabschnitt
- 62: Anschlussabschnitt
- 63: Trennschicht
- 64: Kontaktfläche am Kontaktierungsabschnitt
- 65: Kontaktfläche am Anschlussabschnitt

- 80: Führungsschiene
- 81: Maßverkörperung
- 82: Abdeckblech

## Patentansprüche

1. Induktiver Sensor (10) der ein Gehäuse (40) mit wenigstens einer ersten Öffnung (41) aufweist, wobei die erste Öffnung mit einem Metallblech (21) vorschlossen ist, wobei wenigstens eine elektrische Leitungswindung (22) vorhanden ist, welche sich im Inneren des Gehäuses (43) befindet, so dass sie mit dem Metallblech (21) abgedeckt ist,
**dadurch gekennzeichnet, dass** eine Oberfläche des Metallblechs (21) mit einer elektrisch isolierenden Schicht (24) versehen ist, wobei das Metallblech (21) und die elektrisch isolierende Schicht (24) ein Substrat (20) bilden, wobei die wenigstens eine Leitungswindung (22) stoffschlüssig mit dem Substrat (20) und zwar mit dessen elektrisch isolierender Schicht (24) verbunden ist, wobei die mechanische Steifigkeit des Substrats (20) wesentlich größer ist als die der Leitungswindungen (22), wobei das Metallblech (21) zur Abdeckung gleichzeitig als Substrat (20) genutzt wird, das der Leitungswindung (22) die notwendige Stabilität verleiht.

2. Induktiver Sensor nach Anspruch 1,
wobei die isolierende Schicht (23) dünner als 10 µm ausgeführt ist.

3. Induktiver Sensor nach Anspruch 1 oder 2,
wobei die isolierende Schicht (23) einphasig ausgeführt ist.

4. Induktiver Sensor nach einem der vorstehenden Ansprüche,
wobei die Leitungswindung (22) als ebene Spirale ausgeführt ist und vorzugsweise wenigstens 10 Windungen aufweist.

5. Induktiver Sensor nach einem der vorstehenden Ansprüche,
wobei die isolierende Schicht (23) aus Polyimid besteht.

6. Induktiver Sensor nach einem der vorstehenden Ansprüche,
wobei die isolierende Schicht (23) mit einem Schleuderverfahren hergestellt ist.

7. Induktiver Sensor nach einem der vorstehenden Ansprüche,
wobei das vorzugsweise ebene Metallblech (21) mit dem Gehäuse (40) verschweißt ist, wobei die Schweißnaht nicht über die Ebene, die durch die Außenoberfläche (25) des Metallblechs definiert wird, hinaus ragt.

8. Induktiver Sensor nach Anspruch 7,
wobei das Gehäuse (40) wenigstens eine zweite Öffnung (42) aufweist, in die eine Vergussmasse eingefüllt ist, welche das Metallblech (21) abstützt.

9. Induktiver Sensor nach Anspruch 8,
wobei eine flexible Leiterplatte (60) mit einem Kontaktierungs- und einem Anschlussabschnitt (61 ; 62) vorgesehen ist, wobei der Kontaktierungsabschnitt (61) vollständig mit der Vergussmasse bedeckt ist und wobei der Anschlussabschnitt (62) aus der Vergussmasse herausragt.

10. Induktiver Sensor nach Anspruch 9,
wobei zwischen dem Kontaktierungsabschnitt (61) und dem Metallblech (21) eine Trennschicht (63) vorgesehen ist, die einen wesentlich geringeren Elastizitätsmodul und wenigstes die fünffache Dicke des Metallblechs (21) aufweist.

11. Induktiver Sensor nach Anspruch 9 oder 10,
Wobei an dem Kontaktierungsabshnitt (61) der flexiblen Leiterplatte (60) wenigstens eine Kontaktfläche (64) vorgesehen ist, die mit der wenigstens einen Leitungswihdung (22) auf dem Metallblech (21) über etnen Draht elektrisch leikend verbunden ist, wobei eine elektrische Leiterbahn von der Kontaktfläche (64) in den Anschlussabschnitt (62) der flexiblen,Leiterplatte führt.

12. Induktiver Sensor nach Anspruch 11,
wobei die Verbindungsstelle zwischen dem Draht und der wenigstens einen Leitüngswindung (22) nicht von dem Kontaktierungsabschnitt (61) der flexiblen Leiterplatte (60) überdeckt wird.

13. Verfahren zur Herstellung eines Sensors nach eihem der vorstehenden Ansprüche,
wobei das Metallblech (21) mit einer elektrisch isollierenden Schicht (23) versehen wird, wobei anschließend die wenigstens eine Leitungswindung (22) auf die elektrisch isolierende Schicht (23) aufgebracht wird.

14. Verfahren nach Anspruch 13,
Wobei die elektrisch isolierende Schlcht (23) mit einem Schleuderverfahren aus flussigem Kunststoff vorzugsweise Polyimid hergestellt wird, das anschließend verfestigt wird.

## Claims

1. Inductive sensor (10), which has a housing (40) with at least one first opening (41), the first opening being closed by a metal plate (21), there being at least one electrical conducting coil (22), which is located inside the housing (43), so that it is covered by the metal plate (21),
**characterized in that** a surface of the metal plate (21) is provided with an electrically insulating layer (24), the metal plate (21) and the electrically insulating layer (24) forming a substrate (20), the at least one conducting coil (22) being connected in a material-bonding manner to the substrate (20), to be specific to the electrically insulating layer (24) thereof, the mechanical stiffness of the substrate (20) being significantly greater than that of the conducting coils (22), and the metal plate (21) being used for covering and at the same time as a substrate (20) that lends the conducting coil (22) the necessary stability.

2. Inductive sensor according to Claim 1,
the insulating layer (23) being configured as thinner than 10 µm.

3. Inductive sensor according to Claim 1 or 2,
the insulating layer (23) being configured in a monophase form.

4. Inductive sensor according to one of the preceding claims,
the conducting coil (22) being configured as a flat spiral and preferably having at least 10 turns.

5. Inductive sensor according to one of the preceding claims,
the insulating layer (23) consisting of polyimide.

6. Inductive sensor according to one of the preceding claims,
the insulating layer (23) being produced by a centrifugal process.

7. Inductive sensor according to one of the preceding claims,
the preferably flat metal plate (21) being welded to the housing (40), the welding seam not protruding beyond the plane that is defined by the outer surface (25) of the metal plate.

8. Inductive sensor according to Claim 7,
the housing (40) having at least one second opening (42), into which a casting compound that supports the metal plate (21) is poured.

9. Inductive sensor according to Claim 8,
a flexible printed circuit board (60) being provided with a contacting section (61) and a connecting section (62), the contacting section (61) being completely covered by the casting compound and the connecting section (62) protruding from the casting compound.

10. Inductive sensor according to Claim 9,
a dividing layer (63) being provided between the contacting section (61) and the metal plate (21) and having a significantly lower modulus of elasticity than the metal plate (21) and at least five times the thickness thereof.

11. Inductive sensor according to Claim 9 or 10,
the contacting section (61) of the flexible printed circuit board (60) being provided with at least one contact area (64), which is connected in an electrically conducting manner via a wire to the at least one conducting coil (22) on the metal plate (21), and an electrical conductor track leading from the contact area (64) into the connecting section (62) of the flexible printed circuit board.

12. Inductive sensor according to Claim 11,
the connecting point between the wire and the at least one conducting coil (22) not being covered by the contacting section (61) of the flexible printed circuit board (60).

13. Method of producing a sensor according to one of the preceding claims,
the metal plate (21) being provided with an electrically insulating layer (23), the at least one conducting coil (22) subsequently being applied to the electrically insulating layer (23).

14. Method according to Claim 13,
the electrically insulating layer (23) being produced by a centrifugal process from liquid plastic, preferably polyimide, which is subsequently made to set.

## Revendications

1. Capteur inductif (10) qui possède un boîtier (40) muni d'au moins une première ouverture (41), la première ouverture étant fermée par une tôle métallique (21), au moins un enroulement de câble électrique (22) étant présent, lequel se trouve à l'intérieur du boîtier (43) de sorte qu'il soit recouvert par la tôle métallique (21),
**caractérisé en ce qu'**une surface de la tôle métallique (21) est dotée d'une couche électriquement isolante (24), la tôle métallique (21) et la couche électriquement isolante (24) formant un substrat (20), l'au moins un enroulement de câble électrique (22) étant relié par accouplement de matière avec le substrat (20), et ce avec sa couche électriquement isolante (24), la rigidité mécanique du substrat (20) étant sensiblement supérieure à celle des enroulements de câble (22), la tôle métallique (21) destinée au recouvrement étant en même temps utilisée comme substrat (20) qui confère à l'enroulement de câble (22) la stabilité requise.

2. Capteur inductif selon la revendication 1, avec lequel la couche isolante (23) est réalisée plus mince que 10 µm.

3. Capteur inductif selon la revendication 1 ou 2, avec lequel la couche isolante (23) est réalisée en une seule phase.

4. Capteur inductif selon l'une des revendications précédentes, avec lequel l'enroulement de câble (22) est réalisé sous la forme d'une spirale plane et présente de préférence au moins 10 spires.

5. Capteur inductif selon l'une des revendications précédentes, avec lequel la couche isolante (23) est constituée de polyamide.

6. Capteur inductif selon l'une des revendications précédentes, avec lequel la couche isolante (23) est fabriquée avec un procédé de centrifugation.

7. Capteur inductif selon l'une des revendications précédentes, avec lequel la tôle métallique (21) de préférence plane est soudée au boîtier (40), le cordon de soudure ne faisant pas saillie au-dessus du plan qui est défini par la surface extérieure (25) de la tôle métallique.

8. Capteur inductif selon la revendication 7, avec lequel le boîtier (40) présente au moins une deuxième ouverture (42) qui est remplie avec une masse de scellement, laquelle soutient la tôle métallique (21).

9. Capteur inductif selon la revendication 8, avec lequel il est prévu un circuit imprimé souple (60) comprenant une portion de mise en contact et une portion de raccordement (61 ; 62), la portion de mise en contact (61) étant entièrement recouverte par la masse de scellement et la portion de raccordement (62) faisant saillie hors de la masse de scellement.

10. Capteur inductif selon la revendication 9, avec lequel il est prévu une couche de séparation (63) entre la portion de mise en contact (61) et la tôle métallique (21), laquelle présente un module d'élasticité sensiblement inférieur et au moins le quintuple de l'épaisseur de la tôle métallique (21).

11. Capteur inductif selon la revendication 9 ou 10, avec lequel au moins une surface de contact (64) est prévue sur la portion de mise en contact (61) du circuit imprimé souple (60), laquelle est reliée électriquement par le biais d'un fil avec ledit enroulement de câble (22) sur la tôle métallique (21), une piste conductrice électrique menant de la surface de contact (64) dans la portion de raccordement (62) du circuit imprimé souple.

12. Capteur inductif selon la revendication 11, avec lequel le point de liaison entre le fil et l'au moins un enroulement de câble (22) n'est pas recouvert par la portion de mise en contact (61) du circuit imprimé souple (60).

13. Procédé de fabrication d'un capteur selon l'une des revendications précédentes, selon lequel la tôle métallique (21) est munie d'une couche électriquement isolante (23), l'au moins un enroulement de câble (22) étant ensuite appliqué sur la couche électriquement isolante (23).

14. Procédé selon la revendication 13, selon lequel la couche électriquement isolante (23) est fabriquée avec un procédé de centrifugation en matière plastique liquide, de préférence du polyamide, qui est ensuite solidifiée.
